# EUROPÄISCHE PATENTSCHRIFT

(11) **EP 0 588 141 B1**
(45) Veröffentlichungstag und Bekanntmachung des Hinweises auf die Patenterteilung: **21.02.1996**
(21) Anmeldenummer: 93113826.7
(22) Anmeldetag: 30.08.1993
(51) Int. Cl.: B60J 7/057

(54) **Vorrichtung zur Begrenzung der Anzahl von Umdrehungen einer Welle für drehbare Antriebe von Schiebedächern an Kraftfahrzeugen**
Device for limiting the number of revolutions of a shaft of a rotary drive for a sliding roof of an automobile
Dispositif pour limiter le nombre de tours de l'arbre d'une commande rotative pour toits ouvrants de véhicules automobiles

(30) Priorität: 12.09.1992 DE 4230580
(43) Veröffentlichungstag der Anmeldung: 23.03.1994
(73) Patentinhaber: Rockwell Golde GmbH, D-60314 Frankfurt (DE)
(72) Erfinder: Grimm, Rainer, Dipl.-Ing., D-35578 Wetzlar (DE); Deckardt, Jürgen, D-63477 Maintal (DE); Stehning, Kai, Dipl.-Ing., D-65812 Bad Soden (DE)
(74) Vertreter: Oppermann, Ewald, Dipl.-Ing.

(56) Entgegenhaltungen:
- DE-C- 4 026 754

## Beschreibung

Die Erfindung bezieht sich auf eine Vorrichtung zur Begrenzung der Anzahl von Umdrehungen einer Welle für drehbare Antriebe von Schiebedächern an Kraftfahrzeugen entsprechend dem Oberbegriff des Patentanspruchs 1.

Vorrichtungen dieser Gattung sind bekannt (DE-C-23 33 666, DE-C 40 26 754). Mit diesen bewährten Vorrichtungen ist es möglich, zwei verschiedene Bewegungsabläufe, nämlich wahlweises Verschieben oder Ausstellen bzw. Einschwenken des Schiebedeckels bei Schiebehebedächern, trotz der für diese beiden Bewegungsabläufe unterschiedlich langen, mittels der Vorrichtung zu begrenzenden Stellwege, mit derselben Welle zu bewirken.

Bei einer der bekannten Vorrichtungen (DE-C-23 33 666) ist ausgehend von nur einer Schalt- oder Nullstellung, in welcher der Sperrstift ausschließlich betätigt werden kann, zu Beginn eines der beiden Bewegungsabläufe, oder bei Übergang von einem Bewegungsablauf auf den anderen, beispielsweise der Übergang von der Schiebebewegung nach erfolgtem Schließen des Daches in die Ausschwenkbewegung, lediglich der Sperrstift zur Aufhebung der Drehblockierung in den Weg der mit dem Zahnring verbundenen Anschlagmittel einzuschalten. Hierbei erfüllt der Sperring zwei Funktionen, nämlich einerseits trägt er die wegbegrenzenden Anschlagmittel und andererseits hält er mit seiner Ringschulter den eingeschalteten Sperrstift fest, so daß der Antrieb in beiden Drehrichtungen betätigt werden kann. Ein Ausrasten des Sperrstifts zur Blockierung der Drehbewegungen ist hierbei nur an einer einzigen Stelle, d.h. bei Erreichen der Deckelschließstellung möglich. Auf dem gesamten Weg der Deckelschließ- und -ausstellbewegung bleibt der Sperrstift eingerastet, so daß Zwischenstellungen nicht blockiert werden.

Bei der anderen bekannten Vorrichtung (DE-C-40 26 754) dagegen ist die Ringschulter des Sperrings mit mindestens einer weiteren Unterbrechung für den Durchtritt des Sperrstifts versehen, so daß mindestens eine weitere festgelegte Zwischenstellung des Deckels ermöglicht wird, in welcher der Antrieb drehblockiert und der Deckel wirksam gegen unerwünschte Verschiebe- bzw. Verschwenkbewegungen gesichert ist. Diese Drehblockierung und Sicherung tritt wie in der Nullstellung ein, wenn der Sperrstift einer weiteren Unterbrechung in der Ringschulter des Sperrings gegenübersteht, so daß sich der Sperrstift infolge der auf ihn einwirkenden Federkraft zur Blockierung des Drehantriebs verschieben kann.

Bei beiden bekannten Ausführungsformen der Vorrichtung ist das zur Betätigung des Sperrstifts im Kurbelfuß angeordnete Betätigungselement als in einer Rastbuchse des Kurbelfußes verschiebbar geführter und koaxial mit dem Sperrstift angeordneter Rastbolzen ausgebildet, der zwischen zwei Raststellungen verschiebbar und mittels eines an ihm befestigten Betätigungsknopfes bedienbar ist. Sollen Drehblockierungen der Welle aufgehoben werden, so ist bei dieser Vorrichtungsausgestaltung der Betätigungsknopf jeweils einzudrücken. Gewünschte Schiebedeckelbewegungen erfordern daher sowohl eine Betätigung des Knopfes als auch der klappbaren Bedienungskurbel. Diese beiden Betätigungsschritte bereiten bei der gegebenen ergonomisch günstigen Gestaltung der Bedienungskurbel zwar keinerlei Schwierigkeiten und werden von den Fahrzeugbenutzern rasch beherrscht, jedoch wird im Zuge fortschreitender Anforderungen an den Bedienungskomfort eine weitere Bedienungserleichterung angestrebt.

Der vorliegenden Erfindung liegt daher die Aufgabe zugrunde, eine Vorrichtung der eingangs bezeichneten Gattung so auszubilden, daß alle Betätigungen ausschließlich durch Bewegungen der Bedienungskurbel erfolgen können.

Die gestellte Aufgabe wird durch die kennzeichnenden Merkmale des Patentanspruchs 1 gelöst. Die Unteransprüche beinhalten vorteilhafte und bevorzugte Ausgestaltungen der erfindungsgemäßen Vorrichtung.

Bei der erfindungsgemäß ausgebildeten Vorrichtung führt jede von der Nullstellung der Bedienungskurbel, d.h. von derjenigen Stellung, in welcher sich die Bedienungskurbel in der zugehörigen Aufnahmevertiefung des Fahrzeughimmels befindet, ausgehende volle Ausschwenkbewegung in die Drehposition zu einer Verschiebung des Betätigungselements im Kurbelfuß und damit zu einer Verschiebung des Sperrstifts in seine die Drehblockierung aufhebende Position. Hierbei nimmt der Schaltarm des Kurbelarms durch kraftschlüssigen Eingriff das Betätigungselement in Richtung des Rosettenkörpers verschiebend mit, wobei das Betätigungselement den Sperrstift gegen die auf diesen einwirkende Federkraft zur Aufhebung der Drehblockierung verschiebt. Ist die Verschiebebewegung von Betätigungselement und Sperrstift am Ende der Ausschwenkbewegung des Kurbelarms beendet, kann die Bedienungskurbel in jede der beiden Drehrichtungen zum Antrieb des Schiebedeckels gedreht werden, worauf das Betätigungselement nach Aufhebung des kraftschlüssigen Eingriffs mit dem Schaltarm durch Federkraft in seine Ausgangslage zurückgestellt wird. Wird die Bedienungskurbel wieder in die Aufnahmevertiefung ggf. nach Drehbetätigung zurückgeschwenkt, so weicht das Betätigungselement dem verschwenkenden Schaltarm seitlich gegen Federkraft aus, bis die Kupplung des Schaltarms mit dem Betätigungselement in der Kurbelnullstellung wieder herbeigeführt ist. Die erfindungsgemäße Vorrichtung ist von einfacher und zuverlässiger Konstruktion. Die Aufhebung der Drehblockierung wird durch einfaches Ausschwenken des Kurbelarms erreicht, der in seine Ausgangsstellung zurückschwenkbar ist, weil dem etwa parallel zur Welle verschiebbaren Betätigungselement ein zusätzlicher Bewegungsfreiheitsgrad erteilt ist, welcher ein seitliches Ausweichen des Betätigungselements gegenüber dem beim Einschwenken des Kurbelarms in seine Ausgangslage zurückkehrenden Schaltarm ermöglicht.

Das seitliche Ausweichen des Betätigungselements gegenüber dem in seine Ausgangsstellung zurückkehrenden Schaltarm wird vorzugsweise entsprechend Anspruch 2 durch schwenkbare Lagerung des Betätigungselements ermöglicht.

Der Eingriff des Schaltarms mit dem Betätigungselement wird vorteilhaft durch die im Anspruch 3 angegebenen Maßnahmen herbeigeführt.

In den Ansprüchen 4 und 6 ist angegeben, wie die auf das Betätigungselement ausgeübte Federkraft vorzugsweise zur Einwirkung gebracht und durch Anordnung einer Schraubendruckfeder vorteilhaft realisiert werden kann. Die im Anspruch 2 für das Betätigungselement angegebene Schwenkachse wird mit Vorteil durch die Merkmale des Anspruchs 5 gebildet, welche auch eine besonders einfache Ausgestaltung der Mittel einschließen, die trotz der Schwenkbarkeit des Betätigungselements auch dessen Verschiebbarkeit sicherstellen.

Die Erfindung wird nachfolgend in einem Ausführungsbeispiel anhand der Zeichnungen näher erläutert. Darin zeigt:
- Fig. 1: einen Querschnitt durch die Vorrichtung mit in Ruhestellung befindlicher eingeklappter Bedienungskurbel,
- Fig. 2: den Schnitt entlang der Linie II-II in Fig. 1,
- Fig. 3: den abgebrochenen Schnitt längs der Linie III-III in Fig. 2,
- Fig. 4 und 5: in abgebrochener Darstellungsweise Seitenansichten des Sperrings mit ausgerücktem bzw. eingerücktem Sperrstift,
- Fig. 6: ein Ausführungsbeispiel des Sperrings in perspektivischer Wiedergabe,
- Fig. 7: das Betätigungselement in perspektivischer Wiedergabe,
- Fig. 8: die Schnittansicht entlang der Linie VIII-VIII in Fig. 1,
- Fig. 9: die Schnittansicht entlang der Linie IX-IX in Fig. 1,
- Fig. 10: einen der Fig. 1 ähnlichen Querschnitt mit abgebrochen dargestellter Bedienungskurbel in einer Ausklappzwischenstellung, in welcher der Sperrstift den Antrieb noch blockiert,
- Fig. 11: den Schnitt gemäß Fig. 10, jedoch bei vollständig ausgeklappter Bedienungskurbel und durch den Sperrstift freigegebenem Antrieb,
- Fig. 12: den Schnitt gemäß Fig. 10, jedoch bei um 180° gedrehter ausgeklappter Bedienungskurbel,
- Fig. 13: einen der Fig. 11 ähnlichen Schnitt mit wieder in Nullstellung befindlicher, einklappbereiter Kurbel und ausgerücktem Sperrstift,
- Fig. 14: in vergrößerter Darstellung einen abgebrochenen Schnitt durch die Vorrichtung, der den Bewegungsablauf beim Ausklappen der Bedienungskurbel veranschaulicht, und
- Fig. 15: die Schnittdarstellung gemäß Fig. 14, die jedoch den Bewegungsablauf beim Einklappen der Bedienungskurbel in ihre Ruhestellung zeigt.

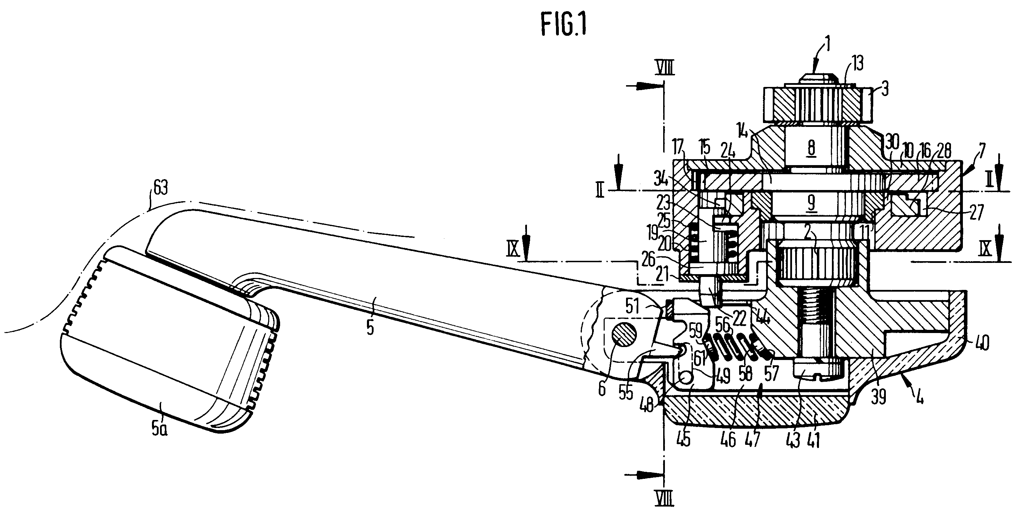

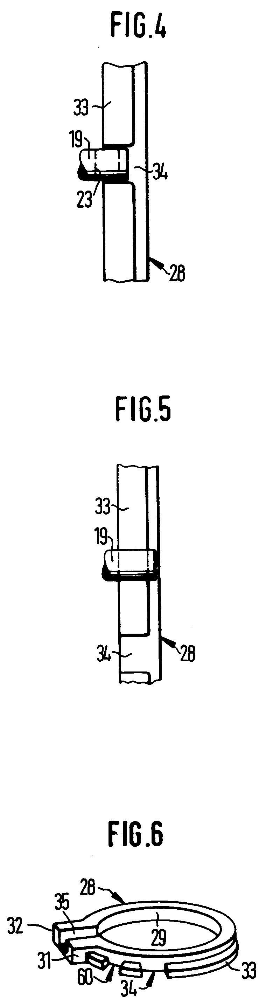

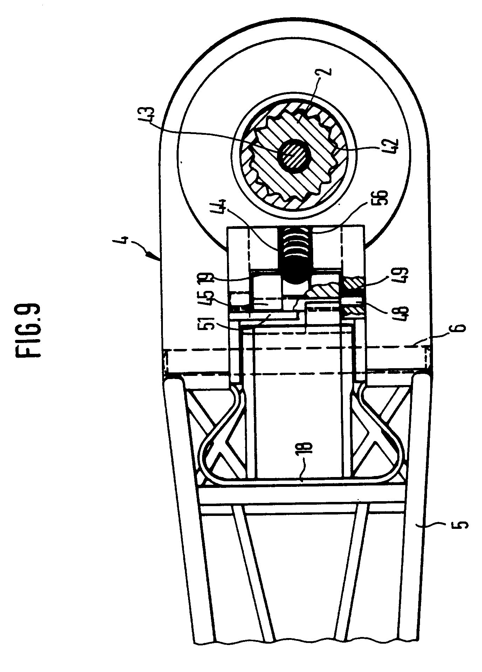

Zur Erläuterung der grundsätzlichen bekannten Konstruktion der Vorrichtung wird zunächst auf die Fig. 1 bis 6 Bezug genommen. Die Welle 1 ist auf der einen Seite mit einem kerbverzahnten Kopf 2 und auf der anderen Seite mit einem drehfest angebrachten Antriebsritzel 3 versehen, das in bekannter Weise zur Betätigung des Schiebedeckels an gegenüberliegenden Seiten mit zwei verschiebbar geführten Gewindekabeln in Eingriff gebracht wird (nicht dargestellt). Die auf den kerbverzahnten Kopf 2 mit einer entsprechenden Gegenverzahnung aufgesteckte Bedienungskurbel ist aus einem Kurbelfuß 4 und einem Kurbelarm 5 zusammengesetzt, an dessen äußerem Ende ein Betätigungsknopf 5a drehbar angebracht ist. Der Kurbelfuß 4 und der Kurbelarm 5 sind mittels eines Schwenkzapfens 6 gelenkig miteinander verbunden. Eine zwischen Kurbelfuß 4 und Kurbelarm 5 wirksame Übertotpunktfeder 18 (Fig. 9) sorgt dafür, daß der Kurbelarm 5 gegenüber dem Kurbelfuß 4 in beiden möglichen Klappstellungen eine stabile durch die Feder 18 vorgespannte Lage einnimmt. Die durch den Rosettenkörper 7 geführte Welle 1 ist mit Bereichen 8 und 9 drehbar an einem Lagerdeckel 10 bzw. einem in den Rosettenkörper 7 eingesetzten Lagerring 11 gelagert.

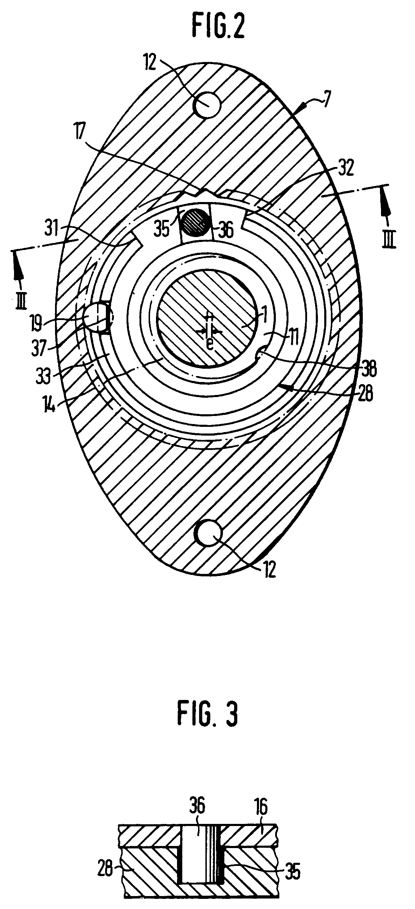

Der Rosettenkörper 7 ist mit Durchgangsbohrungen 12 (Fig. 2) zur Montage der Vorrichtung an einem Teil der Fahrzeugkarosserie versehen. Der Lagerdeckel 10 ist in den Rosettenkörper 7 eingelassen und beispielsweise am Umfang durch Verstemmen befestigt. Die axiale Festlegung des Antriebsritzels 3 übernimmt eine in eine Wellennut eingerastete Sicherungsscheibe 13.

Die an der Welle 1 starr befestigte, vorzugsweise mit ihr einstückige Exzenterscheibe 14, deren Exzentrizität e zur Wellenmittelachse in Fig. 2 angedeutet ist, lagert den mit der Außenverzahnung 15 versehenen Zahnring 16, dessen Verzahnung mit der Innenverzahnung 17 (Fig. 2) im Rosettenkörper 7 im Eingriff steht. Im Ausführungsbeispiel besitzt die Außenverzahnung 15 vierunddreißig Zähne, während die Innenverzahnung 17 sechsunddreißig Zähne aufweist.

Die bekannte Wirkungsweise der bisher beschriebenen Vorrichtung ist folgende: Bei Drehung der Welle 1 mittels der Bedienungskurbel in der einen oder anderen Richtung und der mit ihr drehfest verbundenen Teile bewegt die Exzenterscheibe 14 den Zahnring 16, der sich dabei mit seiner Außenverzahnung 15 an der ortsfesten Innenverzahnung 17 abwälzt. Da sich die Zähnezahlen um zwei Zähne unterscheiden, ist die Relativstellung zwischen dem Zahnring 16 und der Innenverzahnung 17 nach Ablauf einer Umdrehung der Welle 1 um das Maß zweier Zahnteilungen in Umfangsrichtung verschoben. Der Zahnring 16 dreht sich dabei entgegengesetzt zur Drehrichtung der Welle 1, allerdings mit um Größenordnungen geringerer Winkelgeschwindigkeit. Es ist daher ersichtlich, daß die Anbringung von Anschlägen am Zahnring und die Zuordnung ortsfester Anschläge nach genau festlegbarer Umdrehungszahl der Welle 1 zur Blockierung der Welle und damit Umdrehungsbegrenzung, d.h. Wegbegrenzung der über das Ritzel 3 angetriebenen Teile führen muß.

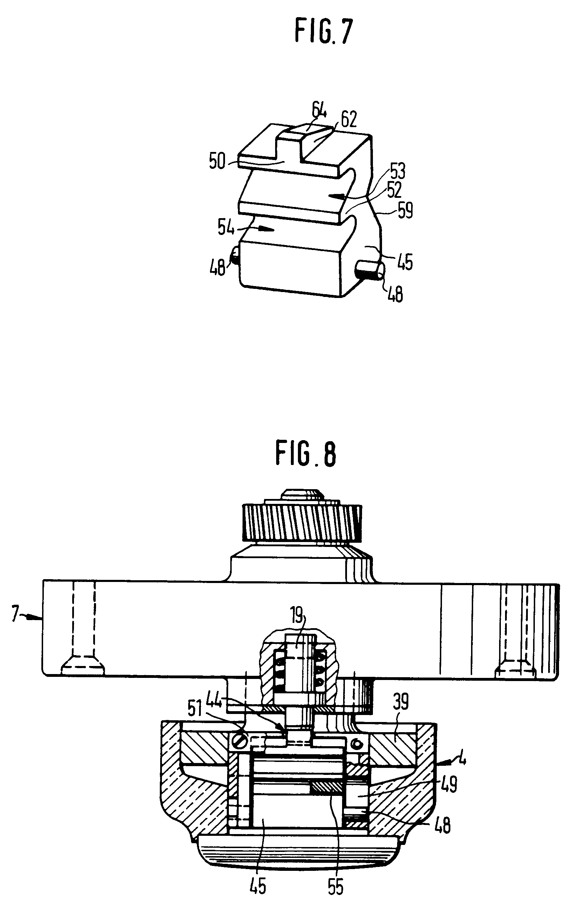

Nachfolgend werden die Anschlagmittel, die einerseits am Rosettenkörper 7 und andererseits am Zahnring 16 angeordnet sind, näher erläutert. Der im Rosettenkörper 7 parallel zur Welle 1 verschiebbar geführte Sperrstift 19 ist am besten aus den Fig. 1 und 8 ersichtlich. Eine im Rosettenkörper 7 befindliche Zylinderbohrung 20 wird nach außen durch einen mit dem Rosettenkörper 7 fest verbundenen Deckel 21 verschlossen. Der Deckel ist mit einer Öffnung versehen, die den aus dem Rosettenkörper 7 herausreichenden Bereich 22 des Sperrstifts 19 führt. Das mit einer Querausnehmung 23 versehene Ende des Sperrstifts 19 ist in einer Bohrung 24 im Rosettenkörper 7 geführt. Eine Schraubendruckfeder 25 ist in den Ringraum zwischen dem Sperrstift 19 und der Zylinderbohrung 20 eingelegt und stützt sich einerseits an einem an dem Sperrstift 19 fest angebrachten Flansch 26 und andererseits am Rosettenkörper 7 ab. Die Bohrung 24 ist bis auf einen die Welle 1 konzentrisch umgebenden Ringkanal 27 durchgeführt, in den der Sperrstift 19 hineinreicht.

Der Sperring 28 ist in den Ringkanal 27 eingelegt, wobei er drehbar mit seiner Innenfläche 29 (Fig. 6) an einem Ringvorsprung 30 des Rosettenkörpers 7 gelagert ist. An dem Sperring 28 angebrachte Umfangsstufen 31 und 32 (Fig. 2, 6) bilden die Anschlagmittel des Sperrings 28. Die zwischen den Umfangsstufen 31 und 32 verlaufende Ringschulter 33 des Sperrings 28 ist mit einer Unterbrechung 34 für den Durchtritt des Sperrstifts 19 in der Nullstellung versehen. Eine zusätzliche Unterbrechung 60 und ggf. weitere (nicht gezeigte) Unterbrechungen markieren Zwischenstellungen, in denen die Vorrichtung für Hebe- und/oder Schiebe-Zwischenstellungen des Schiebedeckels drehblockiert ist. Zwischen den beiden Umfangsstufen 31 und 32 befindet sich eine Radialnut 35, die einen am Zahnring 16 angebrachten Mitnehmerstift 36 (Fig. 2, 3) aufnimmt. Infolge der schlitzförmigen Ausgestaltung der Radialnut 35 kann sich der Mitnehmerstift 36 zum Ausgleich der Exzentrizität e bei der Drehung des Zahnrings 16 in der Radialnut verschieben. Zur Sicherung des Sperrstifts 19 gegen Verdrehen, was mit Rücksicht auf den gewünschten Eingriff zwischen seiner Querausnehmung 23 und der Ringschulter 33 des Sperrings 28 verhindert werden muß, ist er an seinem inneren Ende mit einer dem Sperring 28 zugekehrten und diesem in allen Stellungen anliegenden Abflachung 37 (Fig. 2) versehen.

In Fig. 2 ist mit einer inneren strichpunktierten Kreislinie die Lage der Exzenterscheibe 14 relativ zur Welle 1 und den damit konzentrisch angeordneten kreisförmigen Elementen des Rosettenkörpers 7 angedeutet. Die ebenfalls aus Fig. 2 ersichtliche Rippe 38 verhindert das Verdrehen des mit einer entsprechenden Ausnehmung ausgestatteten Lagerrings 11.

Zur Erläuterung der Ausbildung des Kurbelfußes 4 wird nunmehr auf die Fig. 1, 8 und 9 Bezug genommen. Der Kurbelfuß 4 besteht aus einem Kern 39, einer diesen umschließenden und daran befestigten Abdeckung 40 und einem eine Montageöffnung der Abdeckung 40 schließenden Deckelteil 41. Im Kern 39 befindet sich eine kerbverzahnte Vertiefung 42, mit welcher der Kurbelfuß 4 auf den kerbverzahnten Kopf 2 der Welle 1 formschlüssig und damit drehfest aufgesteckt ist, wie insbesondere Fig. 9 zu erkennen gibt. Eine durch den Kern 39 hindurchgeführte und in ein Innengewinde der Welle 1 bzw. des kerbverzahnten Kopfes 2 eingreifende Schraube 43 befestigt den Kurbelfuß 4 an der Welle 1. Die Befestigung an der Welle 1 erfolgt in einer definierten axialen Relativlage des Kurbelfußes 4 zum Rosettenkörper 7, damit der Kurbelfuß 4 auf noch zu beschreibende Weise durch den Bereich 22 des Sperrstifts 19 drehblockiert werden kann. Zu diesem Zweck befindet sich in der dem Rosettenkörper 7 zugekehrten Fläche des Kurbelfußes 4 ein Durchtrittsschlitz 44, dessen Breite nur geringfügig größer ist als die entsprechende Abmessung des in ihn eingreifenden Bereichs 22 des Sperrstifts 19. Ist der Sperrstift 19 ausgerückt und greift mit seinem Bereich 22 in den Durchtrittsschlitz 44 ein, so ist die Vorrichtung drehblockiert (Fig. 1). Die erfindungsgemäße Ausbildung der die Drehblockierung wahlweise aufhebenden Elemente wird nachfolgend beschrieben.

Das zum Zusammenwirken mit dem Sperrstift 19 im Kurbelfuß 4 vorgesehene Betätigungselement 45 ist in der Klappebene des Kurbelarms 5 verschiebbar und schwenkbar in einem von zwei parallelen Seitenwänden 46 begrenzten Hohlraum 47 im Kurbelfuß 4 geführt. Die Schwenkachse des Betätigungselements 45 wird durch zwei in der Nähe seines unteren Endes an zwei entgegengesetzt gerichteten Seiten angebrachte und miteinander fluchtende Lagerzapfen 48 gebildet, die in gegenüberliegende Langlöcher 49 in den Seitenwänden 46 verschieb- und drehbar eingreifen. Die Langlöcher 49 sind in Verschieberichtung des Betätigungselements 45, d.h. parallel zur Welle 1 ausgerichtet. Die Ausrichtung der Langlöcher 49 entspricht der Verschieberichtung des Betätigungselements 45, das zu diesem Zweck mit einer oberen Stirnfläche 50 (Fig. 7) an einer festen Querwand 51 des Kurbelfußes 4 gleitend gelagert ist.

Das Betätigungselement 45 weist zwei übereinander angeordnete, durch einen Trennsteg 52 voneinander abgegrenzte Rast- und Transportausnehmungen 53 und 54 auf. Diesen Ausnehmungen 53, 54 ist der Schaltarm 55 des als zweiarmiger Hebel ausgebildeten Kurbelarms 5 zugeordnet. Der Schaltarm 55 befindet sich wahlweise entsprechend seiner Schwenkstellung entweder in der oberen Ausnehmung 53 oder in der unteren Ausnehmung 54. Da das Betätigungselement 45 in bestimmten Phasen des Bewegungsablaufs durch Verschwenkung ausweichen kann, wird dem Schaltarm 55 ein Überratschen des Trennstegs 52 ermöglicht.

An der den Rast- und Transportausnehmungen 53, 54 entgegengesetzt gerichteten Seite des Betätigungselements 45 greift an das Betätigungselement die Schraubendruckfeder mit ihrem einen Ende an, während sich ihr anderes Ende mit Vorspannung an einer festen Fläche 57 des Kurbelfußes 4 bzw. seines Kerns 39 abstützt. Die feste Fläche 57 und ein aus ihr vorstehender Aufnahmezapfen ebenso wie die Abstützfläche 59 am Betätigungselement 45 und ein daraus vorstehender Aufnahmezapfen 61 sind jeweils in einem solchen Winkel zur Schieberichtung des Betätigungselements 45 angeordnet, daß dieses ständig einerseits in Richtung der einen Schwenkanschlag für das Betätigungselement 45 bildenden Querwand 51 und andererseits in der von dem Rosettenkörper 7 wegführenden Abwärtsrichtung vorgespannt sind. Dieses wird durch die Schraubendruckfeder 56 erreicht, indem diese nicht nur hinsichtlich ihrer Federwindungen unter Vorspannung zusammengedrückt ist, sondern auch durch die feste Aufnahme ihrer Enden in der in Fig. 1 gezeigten Ruhestellung nach oben gebogen ist.

Weiterhin besitzt das Betätigungselement 45 oben eine Nase 62, die dazu bestimmt ist, mit dem unteren Ende des Sperrstifts 19 zu dessen Betätigung zusammenzuwirken.

Die Wirkungsweise der Vorrichtung wird nachfolgend ausgehend von der in Fig. 1 gezeigten Ruhestellung der Bedienungskurbel näher erläutert. Die Bedienungskurbel ist hierbei mit ihrem Kurbelarm 5 in die in Fig. 1 mit einer strichpunktierten Linie angedeutete Aufnahmevertiefung 63 des Dachhimmels eines Kraftfahrzeugs eingeklappt. Diese Ruhestellung der Bedienungskurbel liegt nicht nur bei geschlossenem Schiebedeckel vor, d.h. bei in die Unterbrechung 34 des Sperrings 28 eingreifendem Sperrstift 19, sondern auch in jeder Schiebe- oder Schwenköffnungsstellung des Schiebedeckels, soweit hierbei eine zusätzliche Unterbrechung der Ringschulter 33 des Sperrings 28, beispielsweise durch die Unterbrechung 60, ein Ausrücken des Sperrstifts 19 ermöglicht. Der in Fig. 1 ausgerückte Sperrstift 19 greift mit dem unteren Ende seines Bereichs 22 in den Durchtrittsschlitz 44 ein, wodurch die Bedienungskurbel undrehbar fixiert und der Antrieb gesperrt ist. In dieser Ruhestellung befindet sich der Schaltarm 55 in der unteren Ausnehmung 54 des Betätigungselements 45. Das Betätigungselement 45 befindet sich in seiner maximal nach unten verschobenen Stellung und liegt mit seiner Stirnfläche 50 der Querwand 51 an. In dieser Stellung befinden sich die Lagerzapfen 48 in Anschlagstellung an den unteren Wandflächen der Langlöcher 49.

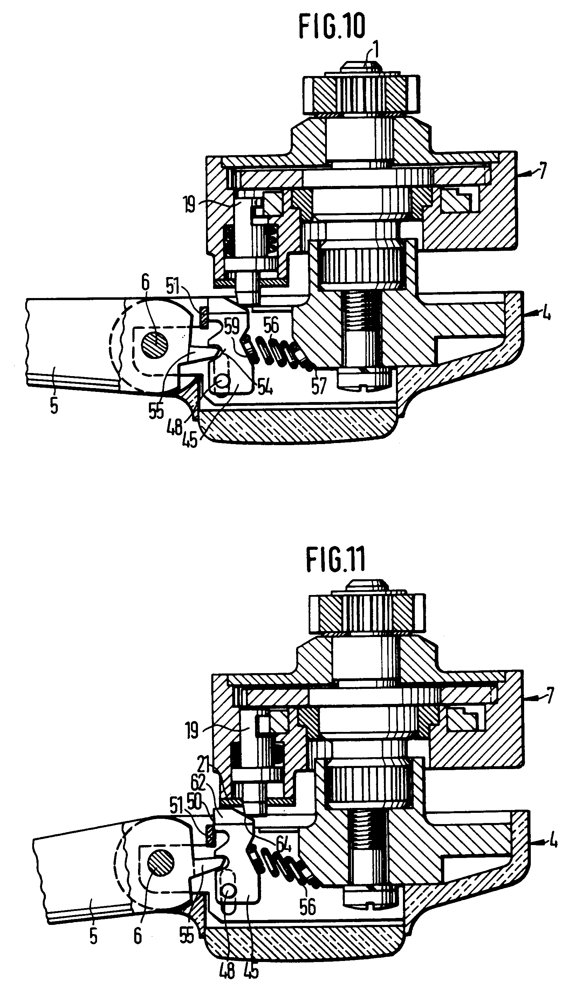

In Fig. 10 ist dargestellt, wie während des Ausklappens des Kurbelarms 5 der Schaltarm 55 durch seinen Eingriff in die untere Ausnehmung 54 das Betätigungselement 45 nach oben verschiebt, wobei das Betätigungselement 45 den Sperrstift 19 verdrängt. Der Antrieb ist aber noch gesperrt, weil der Sperrstift 19 noch nicht ausreichend nach oben verlagert ist, um mit seiner Querausnehmung 23 die Ringschulter 33 des Sperrings 28 aufnehmen zu können.

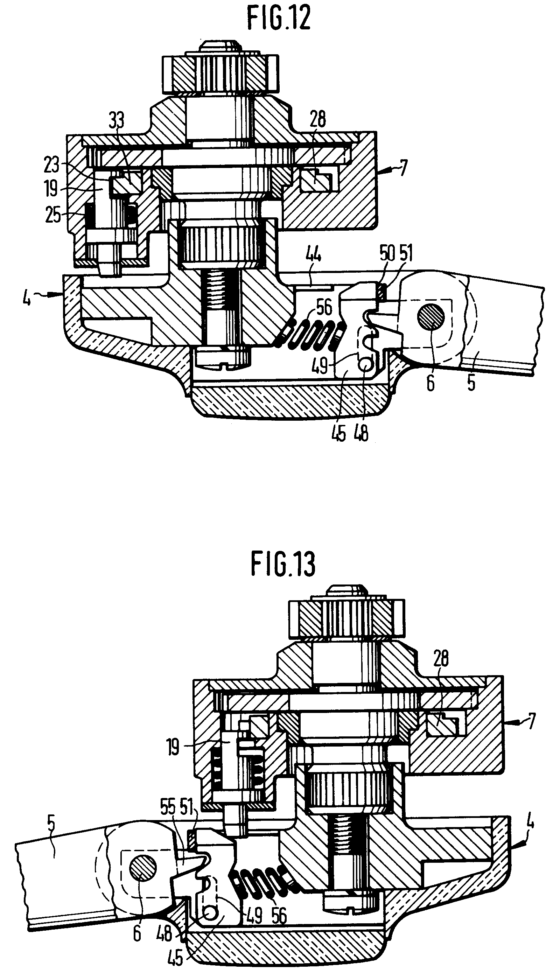

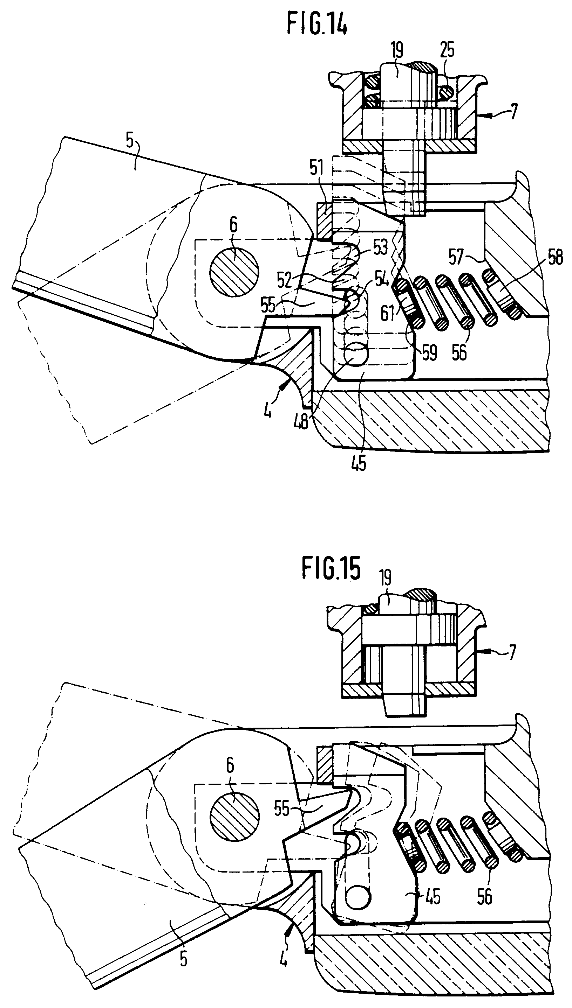

In Fig. 11 ist der Kurbelarm 5 vollständig nach unten ausgeklappt und steht zur Drehung bereit. Der Sperrstift 19 ist jetzt vollständig eingerückt und aus der Unterbrechung 34 (bzw. 60 bei teilweise ausgeschwenktem Schiebedeckel) ausgetreten. Der Antrieb ist jetzt freigegeben und die Bedienungskurbel kann wahlweise in die eine oder andere Richtung gedreht werden. Der in die untere Ausnehmung 54 eingreifende und dem Trennsteg 52 von unten anliegende Schaltarm 55 hat das Betätigungselement 45 in die obere Verschiebegrenzlage transportiert. Hierbei kann die Nase 62 an die untere Fläche des Deckels 21 anschlagen. Der Sperrstift 19 sitzt mit seinem unteren Ende noch einer Schrägfläche 64 des Betätigungselements 45 auf. Dadurch ist das Betätigungselement 45 zunächst noch daran gehindert bezogen auf Fig. 11 im Uhrzeigersinn um die Lagerzapfen 48 zu verschwenken. Wird die Bedienungskurbel geringfügig in die eine oder andere Richtung gedreht, so wird der Kontakt zwischen der Schrägfläche 64 und dem unteren Ende des Sperrstifts 19 aufgehoben, so daß die Schraubendruckfeder 56 das Betätigungselement 45 in seine untere Ausgangslage (Fig. 1) zurückverlagern kann. Hierbei verschwenkt das Betätigungselement 45 im Uhrzeigersinn zur Aufhebung des Resteingriffs des Schaltarms 55 mit der unteren Ausnehmung 54 des Betätigungselements 45, wobei die Stirnfläche 50 kurzfristig von der Querwand 51 abhebt. Nachdem der Trennsteg 52 das Ende des Schaltarms 55 überglitten hat, bewegt die Schraubendruckfeder 56 das Betätigungselement 45 in seine untere Grenzlage, wobei die Stirnfläche 50 sich der Querwand 51 wieder anlegt. Diese Vorgänge erfolgen aufgrund der Federkraft sehr rasch. Der Schaltarm 55 greift jetzt in die obere Ausnehmung 53 des Betätigungselements 45 ein, wie das in der Fig. 12 dargestellt ist. Die Bewegungsphasen beim Ausklappen der Bedienungskurbel sind in Fig. 14 gezeichnet. Man erkennt die vom Schwenkwinkel des Kurbelarms 5 abhängige Verschiebung des Betätigungselements 45 nach oben, wobei der Sperrstift 19 aus seiner ausgerückten Stellung in seine eingerückte Stellung durch das Betätigungselement 45 verschoben wird.

In Fig. 12 befindet sich die Bedienungskurbel in einer Drehzwischenstellung während der Verlagerung des Schiebedeckels. Die Bedienungskurbel ist voll ausgeklappt, der Antrieb ist selbstverständlich entriegelt und der Sperrstift 19 ist eingerückt und wird an axialen Verlagerungen durch den Eingriff seiner Querausnehmung 23 mit der Ringschulter 33 des Sperrings 28 gehindert, wenngleich die zusammengedrückte Schraubendruckfeder 25 die Tendenz hat, den Sperrstift 19 auszurücken. Das Betätigungselement 45 befindet sich in stabiler unterer Grenzlage, in welcher seine Lagerzapfen 48 den unteren Wandungen der Langlöcher 49 anliegen, während seine Stirnfläche 50 der Querwand 51 anliegt. Wird die Bedienungskurbel in eine Drehstellung gebracht, in welcher sie der Aufnahmevertiefung 63 gegenüberliegt, kann der Kurbelarm 5 zwar in die Aufnahmevertiefung 63 eingeklappt werden, dieses hat jedoch keine Auswirkungen auf den Sperrstift 19, so lange dieser in seiner eingerückten Lage festgehalten wird. Beim Einklappen der Kurbel jedoch verschwenkt der Schaltarm 55 durch seine Anlage auf die obere Fläche des Trennstegs 52 das Betätigungselement 45 gegen die Kraft der Schraubendruckfeder 56. Sobald der Schaltarm 55 über den Trennsteg 52 hinweg geglitten ist, stellt die Schraubendruckfeder 56 das Betätigungselement 45 in Gegenrichtung schwenkend bis zur Anlage der Stirnfläche 50 an die Querwand 51 zurück, wobei die untere Ausnehmung 54 den Schaltarm 55 aufnimmt.

In Fig. 13 ist die Situation dargestellt, in welcher sich die Bedienungskurbel der in Fig. 1 gezeigten Aufnahmevertiefung 63 wieder gegenüber befindet, jedoch ist hierbei der Sperrstift 19 durch die ihn belastende Schraubendruckfeder 25 ausgerückt, weil der Eingriff zwischen seiner Querausnehmung 23 und der Ringschulter 33 an der Stelle einer Unterbrechung der Ringschulter aufgehoben ist. Der Sperrstift 19 greift jetzt wieder in den Durchtrittsschlitz 44 am Kurbelfuß 4 ein, so daß die Bedienungskurbel nicht mehr gedreht werden kann. Der Antrieb ist gesperrt. Das Betätigungselement 45 befindet sich noch in seiner unteren Grenzstellung, schwenkt jedoch gesteuert durch den Schaltarm 55 wie vorstehend beschrieben gegen die Kraft der Schraubendruckfeder 56 zurück und anschließend angetrieben durch die Schraubendruckfeder 56 wieder vor, wenn die Bedienungskurbel eingeklappt wird. Am Schluß der Einklappbewegung befindet sich der Schaltarm 55 wieder in der unteren Ausnehmung 54, wie das in Fig. 1 gezeigt ist.

Der Bewegungsablauf beim Einklappen der Kurbel und bei dem Übertritt des Schaltarms 55 von der oberen Ausnehmung 53 in die untere Ausnehmung 54 ist in einzelnen Phasen in Fig. 15 dargestellt. In dieser Figur ist der Sperrstift 19 im Unterschied zu Fig. 13 in seiner eingerückten Stellung dargestellt.

## Patentansprüche

1. Vorrichtung zur Begrenzung der Anzahl von Umdrehungen einer Welle für drehbare Antriebe von Schiebedächern an Kraftfahrzeugen, mit einer aus Kurbelfuß (4) und Kurbelarm (5) bestehenden Bedienungskurbel, deren Kurbelfuß (4) kraftschlüssig an die Welle (1) angreift und deren Kurbelarm (5) über einen Schwenkzapfen (6) gelenkig mit dem Kurbelfuß verbunden ist, und mit einer starr an der Welle (1) befestigten Exzenterscheibe (14), auf deren Umfangsfläche ein mit einer Außenverzahnung (15) versehener Zahnring (16) drehbar gelagert ist, der von einer konzentrisch zur Wellenachse ortsfest in einem Rosettenkörper (7) angeordneten Innenverzahnung (17) umgeben ist, deren Zahnfußkreisradius etwa um den Betrag der Exzentrizität der Exzenterscheibe (14) größer als der Zahnkopfkreisradius des Zahnringes (16) ist, wobei einerseits mit dem Zahnring (16) und andererseits mit dem Rosettenkörper (7) Anschlagmittel für die Endlagen der Welle (1) nach Erreichen einer vorbestimmten Anzahl von Umdrehungen verbunden sind, und wobei das mit dem Rosettenkörper (7) verbundene Anschlagmittel ein parallel zur Welle verschiebbar geführter Sperrstift (19) ist, der nur in mindestens einer bestimmten Stellung des Zahnrings (16) in den Weg der mit dem Zahnring verbundenen Gegenanschlagmittel einschaltbar ist bzw. aus diesem durch Federkraft ausrückt, in eingeschalteter Stellung beide Drehrichtungen des Antriebs zuläßt und in seiner ausgerückten Stellung den Antrieb in beiden Drehrichtungen blockiert, wobei die mit dem Zahnring (16) verbundenen Gegenanschlagmittel als Umfangsstufen (31, 32) eines Sperrings (28) ausgebildet sind, der drehbar und konzentrisch zur Welle (1) im Rosettenkörper (7) gelagert ist, mit einer Radialnut (35) versehen ist, in welche ein am Zahnring (16) befestigter Mitnehmerstift (36) eingreift, und zwischen den Umfangsstufen (31, 32) mit einer Ringschulter (33) ausgestattet ist, die an einer festgelegten, der Nullstellung entsprechenden Stelle und ggf. mindestens einer weiteren Stelle für den Durchtritt des Sperrstifts (19) unterbrochen ist, wobei ferner der mit einer Verdrehsicherung versehene Sperrstift (19) eine Querausnehmung (23) für den Eingriff mit der Ringschulter (33) aufweist, wobei schließlich im Kurbelfuß (4) ein in Richtung auf den Rosettenkörper (7) verschiebbar geführtes Betätigungselement (45) angeordnet ist, das durch Drehen der Bedienungskurbel zur Fluchtung mit dem Sperrstift (19) gebracht werden kann, wodurch bei Betätigung der Sperrstift (19) an den bestimmten Stellen, an denen die Ringschulter (33) unterbrochen ist, in den Weg der Gegenanschlagmittel einschaltbar ist, dadurch gekennzeichnet, daß der Kurbelarm (5) als am Schwenkzapfen (6) gelagerter zweiarmiger Hebel mit einem kürzeren Schaltarm (55) und einem längeren Bedienungsarm ausgebildet ist, dessen Schaltarm (55) beim Ausschwenken des Bedienungsarms in die Kurbelstellung seitlich an das Betätigungselement (45) für dessen Betätigungsverschiebung in Richtung des Rosettenkörpers (7) bis zum Erreichen der maximalen Betätigungsverschiebestellung des Betätigungselements (45) kraftschlüssig angreift, daß bei Erreichen dieser Stellung der kraftschlüssige Eingriff des Schaltarms (55) mit dem Betätigungselement (45) beendet und die Rückkehr des Betätigungselements (45) in dessen Ausgangsstellung durch Federkraft ermöglicht ist, und daß der Schaltarm (55) beim Einschwenken des Bedienungsarms in die Ruhestellung das Betätigungselement (45) gegen Federkraft seitlich verlagert, bis der Kraftschluß zwischen Schaltarm (55) und Betätigungselement (45) in der Ausgangsstellung wieder herbeigeführt ist.

2. Vorrichtung nach Anspruch 1, dadurch gekennzeichnet, daß das Betätigungselement (45) zusätzlich zu seiner Verschiebbarkeit noch um eine parallel zum Schwenkzapfen (6) verlaufende Schwenkachse schwenkbar im Kurbelfuß (4) gelagert ist.

3. Vorrichtung nach Anspruch 1 oder 2, dadurch gekennzeichnet, daß das Betätigungselement (45) zwei übereinander angeordnete, durch einen Trennsteg (52) voneinander abgegrenzte Rast- und Transportausnehmungen (53, 54) aufweist, und daß der Schaltarm (55) wahlweise in jeweils eine der Rast- und Transportausnehmungen (53, 54) eingreift, beim Verschwenken des Kurbelarms (5) von einer Ausnehmung in die andere übergeht, ausgehend von seinem Eingriff in die untere Ausnehmung (54) beim Ausschwenken des Kurbelarms (5) das Betätigungselement (45) in Richtung auf den Rosettenkörper (7) aufwärts verschiebt, bis beim Übergang in die obere Ausnehmung (53) das Betätigungselement (45) durch Federkraft wieder in Gegenrichtung abwärts verschoben wird, ausgehend von seinem Eingriff in die obere Ausnehmung (53) beim Einschwenken des Kurbelarms (5) jedoch lediglich um seine Schwenkachse zurück- und vorschwenkt.

4. Vorrichtung nach einem der Ansprüche 1 bis 3, dadurch gekennzeichnet, daß durch die auf das Betätigungselement (45) ununterbrochen einwirkende Federkraft das Betätigungselement (45) ständig einerseits in Richtung eines die Schiebebewegung führenden Anschlags (Querwand 51) im Kurbelfuß (4) und andererseits in der vom Rosettenkörper (7) wegführenden Abwärtsrichtung vorgespannt ist.

5. Vorrichtung nach einem der Ansprüche 1 bis 4, dadurch gekennzeichnet, daß zur Bildung der Schwenkachse des Betätigungselements (45) in der Nähe seines unteren Endes an zwei entgegengesetzt gerichteten Seiten des Betätigungselements (45) miteinander fluchtende Lagerzapfen (48) angebracht sind, die in Langlöcher (49) verschiebbar eingreifen, welche gegenüberliegend im Kurbelfuß (4) angeordnet und in Verschieberichtung des Betätigungselements (45) ausgerichtet sind.

6. Vorrichtung nach einem der Ansprüche 1 bis 5, dadurch gekennzeichnet, daß die auf das Betätigungselement (45) ununterbrochen einwirkende Federkraft von einer Schraubendruckfeder (56) aufgebracht wird, die sich einerseits an der den Rast- und Transportausnehmungen (53, 54) entgegengesetzt gerichteten Seite des Betätigungselements (45) und andererseits an einer festen Fläche (57) im Kurbelfuß (4) abstützt, wobei die Enden der Schraubendruckfeder (56) so aufgenommen sind, daß die Feder eine Kraftkomponente in Richtung auf das Betätigungselement (45) und zusätzlich eine abwärts gerichtete Kraftkomponente aufbringt.

## Claims

1. Device for limiting the number of revolutions of a shaft for rotary drives of sliding roofs in automobiles, comprising an actuating crank consisting of crank base (4) and crank arm (5), the crank base (4) of which engages force-transmittingly on the shaft (1) and the crank arm (5) of which is connected in articulated manner to the crank base by a pivot pin (6), and comprising an eccentric disc (14), rigidly fixed to the shaft (1), on the circumferential surface of which (disc) there is rotatably journalled a toothed ring (16) provided with an external set of teeth (15), which is surrounded by an internal set of teeth (17) disposed fixed in a rose (7) and concentrically to the shaft axis, the tooth foot radius (dedendum radius) of which is greater than the tooth crest radius (addendum radius) of the toothed ring (16) approximately by the amount of the eccentricity of the eccentric disc (14), wherein abutment means for the limiting positions of the shaft (1) after a predetermined number of revolutions have been reached are connected, on the one hand with the toothed ring (16) and on the other hand with the rose (7), and wherein the abutment means connected with the rose (7) is a blocking pin (19) displaceably guided parallel to the shaft, which (blocking pin) can be engaged (retracted) into the path of the counter-abutment means connected with the toothed ring or disengaged (extended) from it by spring force only in at least one specific position of the toothed ring (16), in the engaged (retracted) position releases both directions of rotation of the drive and in its disengaged (extended) position blocks the drive in both directions of rotation, wherein the counter-abutment means connected with the toothed ring (16) are constructed as circumference steps (31, 32) of a blocking ring (28), which is journalled rotatably and concentrically to the shaft (1) in the rose (7), is provided with a radial groove (35) into which an entraining pin (36) fixed to the toothed ring (16) engages, and is equipped, between the circumference steps (31, 32), with an annular shoulder (33), which is interrupted at a fixed position, corresponding to the zero setting, and possibly also at at least one further position for the passage of the blocking pin (19), wherein furthermore the blocking pin (19), provided with a rotation preventer, possesses a transverse recess (23) for engagement with the annular shoulder (33), wherein finally an actuating element (45), displaceably guided towards the rose (7) is disposed in the crank base (4), which (actuating element) can be brought by rotation of the actuating crank into alignment with the blocking pin (19), with the result that, on actuation, the blocking pin (19), at the specific positions at which the annular shoulder (33) is interrupted, can be engaged (retracted) into the path of the counter-abutment means, characterized in that the crank arm (5) is constructed as a two-armed lever pivotally journalled on the pivot pin (6) and having a shorter indexing arm (55) and a longer actuating arm, of which the indexing arm (55), when the actuating arm is pivoted out into the crank position, acts force-transmittingly laterally on the actuating element (45) to cause its actuation displacement towards the rose (7) until the maximum actuation displaced position of the actuating element (45) is reached, that when this position is reached the force-transmitting engagement of the indexing arm (55) with the actuating element (45) is terminated and the return of the actuating element (45) into its starting position is made possible by spring force, and that the indexing arm (55), when the actuating arm is pivoted in into the at-rest position, displaces the actuating element (45) laterally against spring force until the force engagement between indexing arm (55) and actuating element (45) is again restored in the starting position.

2. Device according to Claim 1, characterized in that the actuating element (45), in addition to its displacement capability, is also pivotally journalled in the crank base (4) about a pivot axis extending parallel to the pivot pin (6).

3. Device according to Claim 1 or 2, characterized in that the actuating element (45) possesses two detent and entraining recesses (53, 54), disposed one above another and separated by a separating web (52), and that the indexing arm (55) engages optionally into one of the detent and entraining recesses (53, 54), moves over from one recess into the other when the crank arm (5) is pivoted, starting from its engagement into the lower recess (54), when the crank arm (5) is pivoted outwards, displaces the actuating element (45) upwards towards the rose (7) until, on the transition over into the upper recess (53), the actuating element (45) is displaced downwards by spring force back in the opposite direction, but starting from its engagement into the upper recess (53) pivots only backwards and forwards about its pivot axis when the crank arm (5) is pivoted in.

4. Device according to one of Claims 1 to 3, characterized in that, by the spring force continually acting on the actuating element (45), the actuating element (45) is continually prestressed, on the one hand towards a stop (transverse wall 51) in the crank base (4) which guides the sliding movement, and on the other hand in the downward direction leading away from the rose (7).

5. Device according to one of Claims 1 to 4, characterized in that, for forming the pivot axis of the actuating element (45), mutually aligned bearing journals (48) are mounted on two oppositely facing sides of the actuating element (45) in the vicinity of its lower end, which journals engage slidably in elongate holes (49) which are disposed opposite each other in the crank base (4) and are aligned in the direction of sliding of the actuating element (45).

6. Device according to one of Claims 1 to 5, characterized in that the spring force acting continuously on the actuating element (45) is applied by a helical compression spring (56), which bears at one end against the side of the actuating element (45) remote from the detent and entraining recesses (53, 54) and at the other end against a fixed surface (57) in the crank base (4), the ends of the helical compression spring (56) being so seated that the spring applies a force component towards the actuating element (45) and additionally a downwardly orientated force component.

## Revendications

1. Dispositif pour limiter le nombre de tours d'un arbre pour des entraînements rotatifs de toits coulissants sur des véhicules automobiles, comportant une manivelle de manipulation constituée par un pied de manivelle (4) et par un bras de manivelle (5), le pied de manivelle (4) attaquant l'arbre (1) en coopération de forces et le bras de manivelle (5) étant relié en articulation via un tenon de basculement (6) au pied de manivelle, et comportant un disque d'excentrique (14) fixé rigidement sur l'arbre (1), sur la surface périphérique duquel est montée en rotation une couronne dentée (16) pourvue d'une denture extérieure (15), qui est entourée par une denture intérieure (17) agencée de façon concentrique à l'axe de l'arbre et fixe dans un corps de rosette (7) et dont le rayon du cercle au pied de denture est plus élevé, approximativement de la valeur de l'excentricité du disque d'excentrique (14), que le rayon du cercle à la tête de denture de la couronne dentée (16) ; dans lequel sont reliés d'une part à la couronne dentée (16) et d'autre part au corps de rosette (7) des organes de butée pour les positions de fin de course de l'arbre (1) après avoir atteint un nombre prédéterminé de tours ; et dans lequel l'organe de butée relié au corps de rosette (7) est une tige de blocage (19) guidée en déplacement parallèle à l'arbre, qui peut être engagée, seulement dans au moins une position déterminée de la couronne dentée (16), dans le trajet des organes de contrebutée reliés à la couronne dentée ou qui est rétractée hors de ce trajet sous la force d'un ressort, qui permet en position engagée les deux directions de rotation de l'entraînement et qui bloque dans sa position rétractée l'entraînement dans les deux directions de rotation ; dans lesquels les organes de contrebutée reliés à la couronne dentée (16) sont réalisés sous la forme de gradins périphériques (31, 32) d'un anneau de blocage (28) qui est monté en rotation et de façon concentrique à l'arbre (1) dans le corps de rosette (7), qui est pourvu d'une gorge radiale (35) dans laquelle s'engage une tige d'entraînement (36) fixée sur la couronne dentée (16), et qui est pourvu, entre les gradins périphériques (31, 32), d'un épaulement annulaire (33) qui est interrompu à un emplacement déterminé correspondant à la position zéro et, le cas échéant, à au moins un autre emplacement, pour le passage de la tige de blocage (19), cette tige de blocage (19) pourvue d'un blocage anti-rotation présentant un évidement transversal (23) pour l'engagement avec l'épaulement annulaire (33) ; et dans lequel est finalement agencé dans le pied de manivelle (4) un élément d'actionnement (45) guidé en déplacement en direction du corps de rosette (7), cet élément pouvant être amené en alignement avec la tige de blocage (19) par rotation de la manivelle de manipulation, grâce à quoi, lors de l'actionnement aux emplacements déterminés auxquels l'épaulement annulaire (33) est interrompu, la tige de blocage (19) peut être commutée dans le parcours des organes de contrebutée, caractérisé en ce que le bras de manivelle (5) est réalisé sous la forme d'un levier à deux bras monté sur le tenon de basculement (6) et comportant un bras de commutation plus court (55) et un bras de manipulation plus long, de sorte que lors du basculement du bras de manipulation dans la position de rotation de la manivelle, le bras de commutation (55) attaque par coopération de forces latéralement l'élément d'actionnement (45) pour son déplacement d'actionnement en direction du corps de rosette (7) jusqu'à atteindre la position maximale de déplacement d'actionnement de l'élément d'actionnement (45), en ce que lorsque cette position est atteinte, l'engagement en coopération de forces du bras de commutation (55) avec l'élément d'actionnement (45) est terminé, et le retour de l'élément d'actionnement (45) dans sa position de départ est rendu possible sous la force d'un ressort, et en ce que lors du basculement du bras de manipulation dans la position de repos, le bras de commutation (55) déplace latéralement l'élément d'actionnement (45) à l'encontre de la force d'un ressort, jusqu'à ce que la coopération de forces entre le bras de commutation (55) et l'élément d'actionnement (45) soit rétablie dans la position de départ.

2. Dispositif selon la revendication 1, caractérisé en ce que l'élément d'actionnement (45) est monté en basculement, en supplément à son déplacement, encore autour d'un axe de basculement s'étendant parallèlement au tenon de basculement (6), dans le pied de manivelle (4).

3. Dispositif selon l'une ou l'autre des revendications 1 et 2, caractérisé en ce que l'élément d'actionnement (45) présente deux évidements d'enclenchement et de transport (53, 54) agencés l'un au-dessus de l'autre et séparés l'un de l'autre par une barrette de séparation (52), et en ce que le bras de commutation (55) s'engage au choix dans l'un des évidements d'enclenchement et de transport respectif (53, 54), passe d'un évidement dans l'autre lors du basculement du bras de manivelle (5), déplace l'élément d'actionnement (45) vers le haut en direction du corps de rosette (7), en partant de son engagement dans l'évidement inférieur (54) lors du basculement du bras de manivelle (5), jusqu'à ce que lors du passage dans l'évidement supérieur (53), l'élément d'actionnement (45) soit déplacé à nouveau en direction opposée vers le bas par la force d'un ressort, cependant, en partant de son engagement dans l'évidement supérieur (53) lors de la rétraction du bras de manivelle (5), il bascule en retour et vers l'avant seulement autour de son axe de basculement.

4. Dispositif selon l'une quelconque des revendications 1 à 3, caractérisé en ce que grâce à la force d'un ressort agissant sans interruption sur l'élément d'actionnement (45), l'élément d'actionnement (45) est constamment mis sous précontrainte d'une part en direction d'une butée (paroi transversale 51) qui guide le mouvement de déplacement dans le pied de manivelle (4), et d'autre part en direction descendante en éloignement du corps de rosette (7).

5. Dispositif selon l'une quelconque des revendications 1 à 4, caractérisé en ce qu'il est prévu, pour former l'axe de basculement de l'élément d'actionnement (45), des tenons de palier (48) en alignement mutuel à proximité de son extrémité inférieure sur deux faces dirigées en sens opposé d'une à l'autre de l'élément d'actionnement (45), ces tenons s'engageant en déplacement dans des trous oblongs (49) qui sont ménagés en vis-à-vis dans le pied de manivelle (4) et qui sont dirigés en direction de déplacement de l'élément d'actionnement (45).

6. Dispositif selon l'une quelconque des revendications 1 à 5, caractérisé en ce que la force de ressort agissant sans interruption sur l'élément d'actionnement (45) est établie par un ressort de pression hélicoïdal (56) qui s'appuie d'une part contre la face de l'élément d'actionnement (45), qui est dirigée en sens opposé aux évidements d'enclenchement et de transport (53, 54), et d'autre part contre une surface fixe (57) dans le pied de manivelle (4), et en ce que les extrémités du ressort de pression à vis (56) sont reçues de telle sorte que le ressort établit une composante de force en direction de l'élément d'actionnement (45) et en supplément une composante de force dirigée vers le bas.
